Europäisches Patentamt

European Patent Office

Office européen des brevets

(11) Publication number: **0 180 584**
**B1**

## (12) EUROPEAN PATENT SPECIFICATION

(45) Date of publication of patent specification: **31.08.88**

(21) Application number: **84902621.6**

(22) Date of filing: **20.06.84**

(86) International application number:
**PCT/SE84/00236**

(87) International publication number:
**WO 85/00203 17.01.85 Gazette 85/02**

(51) Int. Cl.⁴: **F 15 B 15/10, F 16 K 31/126, F 15 B 7/00**

(54) **VALVE SYSTEM WITH HYDRAULIC POWER TRANSMISSION.**

(30) Priority: **23.06.83 SE 8303607**

(43) Date of publication of application:
**14.05.86 Bulletin 86/20**

(45) Publication of the grant of the patent:
**31.08.88 Bulletin 88/35**

(84) Designated Contracting States:
**AT BE DE FR GB NL SE**

(56) References cited:
**CH-A- 558 269**
**DE-A-2 607 080**
**FR-A-1 133 487**
**SE-B- 352 180**
**SE-B- 394 021**
**SE-B- 400 357**
**US-A-1 642 784**

(73) Proprietor: **SSAB Svenskt Stal AB**
**Box 163 44**
**S-103 26 Stockholm (SE)**

(72) Inventor: **LINDGREN, Nils, Erik**
**Örtgatan 30**
**S-781 56 Borlänge (SE)**

(74) Representative: **Wärulf, Olov**
**Svenkst Stal**
**S-613 01 Oxelösund (SE)**

Courier Press, Leamington Spa, England.

## Description

The present invention relates to a flow limiting valve system for gas or liquid comprising in a valve tube, a normally open valve being urged into its open position by adjustable force producing means so that it closes at a certain flow rate through said valve.

Technical background

Control valves and shut-off valves are generally provided with a control device in the form of a hand control, which is mounted directly on the valve spindle. A device for remote control operation can be entirely mechanical and for example, be formed of one or more shafts, which are connected to the valve spindle via a cardan joint or be electronic and be formed of an electric motor, which via a gear reduction is connected to the valve spindle, and the motor is controlled, for example, by electrical signals which, via a relay closes the current to the motor. The remote control is actuated for example by the valve being located in a place which cannot be reached without great difficulty inter alia on pipes, located high above the ground and in closed spaces, as for example cisterns. It has also proven difficult to arrange remote controls with lead-ins in for example cisterns in which a fluid or a gas is under pressure and also on long distances where many moving directions of the transmission are demanded.

Quick closing valves to a certain extent have an outstanding position in the applications, where the present invention is advantageous. Quick closing can either be done manually or automatically, e.g. when damage has occurred and it is desired to immediately stop the gas or liquid flow. A complete mechanical flow limiting valve is described in the Swedish Patent 7413120 (SE—B—394021) and comprises a valve body on a valve push rod mounted in a tube and movable in the longitudinal direction of the tube towards a ring-shaped seat. The push rod is in connection with a spring on the outside of the tube via a link mechanism, where one of the link arms extends through the wall of the tube via a sealing box. When there is a pipe rupture at a point downstream of the flow limiting valve in the flow direction, the flow rate in the tube increases and a low pressure arises on the underside of the valve body. When the low pressure causes a force on the underside of the valve body. When the low pressure causes a force on the valve body, which via the link mechanism compresses the spring, the valve body is displaced towards the seat, and the tube is closed. The size of the spring force is adjustable and thus the flow limiting valve can be closed at different flow rates.

A disadvantage with the conventional flow limiting valve is that the sealing box in the tube wall as time goes becomes worn and begins to leak. Another disadvantage is that there is no easy way to change the adjustment in the valve using remote control. A further disadvantage is that the valve cannot be opened without great difficulty if it has been closed by mistake. Then the pressure in front of the valve has to be lowered, e.g. by using a special unloading valve before the flow limiting valve can be opened again. In the same way another conventional flow limiting valve works, which is not adjustable from the outside of the tube but is equipped with a spring, which directly works on the valve body inside the tube.

Description of the invention

The purpose with the invention is to bring about a closed hydraulic power transmission in which there is no risk for leakage and wear. The invention relates to a flow limiting valve system for gas or liquid comprising in a valve tube, a normally open valve being urged into its open position by adjustable force producing means so that it closes at a certain flow rate through said valve. The invention is characterised in that said force producing means is a telemotor system comprising a master unit of a tubular and expandable bellows type and a slave unit also of a tubular and expandable bellows type, said system being filled with a hydraulic fluid, wherein the remotely arranged master unit is provided with an adjusting device for compressing the bellows more or less in order to vary the hydraulic pressure in the telemotor system, and wherein the slave unit is connected with the valve member of said normally open valve.

Preferably the valve member is movable in the longitudinal direction of the valve tube and adapted to be in close contact with the valve seat when the force exerted by the expandable bellows of the slave unit is overcome by a force on the valve member in the opposite direction produced by the gas or liquid flow through said valve. The expandable bellows of the slave unit at its one end is connected to a push rod on which the valve member is mounted and at its other end is connected to the pressure tube of the telemotor system which pressure tube is fixed to the valve tube by means of a fastening device and is connected to the expandable bellows of the master unit which is arranged outside of the valve tube. The push rod is provided with a tubular guide member surrounding the expandable bellows of the slave unit and being in sliding contact with the outer surface of said pressure tube.

The expandable bellows of the master unit can be compressed more or less by means of a control device comprising a spring actuated pressure limitation device. The pressure limitation device comprises a double acting air-operated membrane provided on the one hand for compression of the pressure limitation spring in the pressure limitation device thereby causing a quick closing of the valve and on the other hand for compression of the expandable bellows of the master unit thereby causing opening of the valve. A manometer indicating the hydraulic pressure is arranged in the telemotor system, which pressure is proportional to the flow rate through said valve.

## Description of the figures

The invention is described in the following section in a performance example by way of the accompaning drawings, in which:

Figure 1 is a longitudinal section through a flow limiting valve

Figure 2 is a remote control device to the flow limiting valve according to Figure 1.

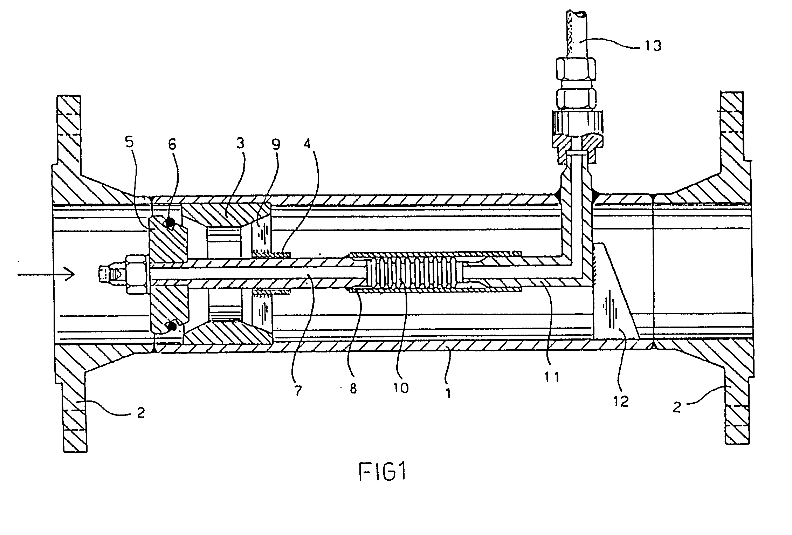

Referring to Figure 1, the flow limiting valve comprises a cylindrical valve tube 1, having two end flanges 2, by which the valve can be connected to a tubesystem having substantially the same tube dimensions as the tube 1. A conical seat 3, is mounted at the one end of the valve tube 1, and extends around the inside of the valve tube 1. A conical valve member 5, adapted to fit against the seat 3, by a sealing ring 6, is mounted at the one end of a push rod 7, which is axially adjustable in a guide bush 4, attached on the seat 3, supported by fins 9. The push rod 7, at its other end is fixedly attached to expansion bellows 10, made of steel as per the invention and having a guide bush 8, which surrounds the expansion bellows 10, and in which the expansion bellows 10, are axially movable. The other end of the expansion bellows 10, are fixedly attached on a pressure tube 11, which extends from the guide bush 8, via a tube bent out through the wall of the valve tube 1, to which the pressure tube 11, is welded. The guide bush 8, also surrounds a part of the pressure tube 11, and is adjustable along the pressure tube 11, which in its turn is fixedly supported by a fastening device 12, which extends from the pressure tube 11, to the inner surface of the valve tube 1, through which axial forces in the pressure tube 11 are taken up when there is movement in the expansion bellows 10. The pressure tube 11, is via a reinforced hose 13, in connection with a pressure bellows 14, as per the invention outside the valve tube 1.

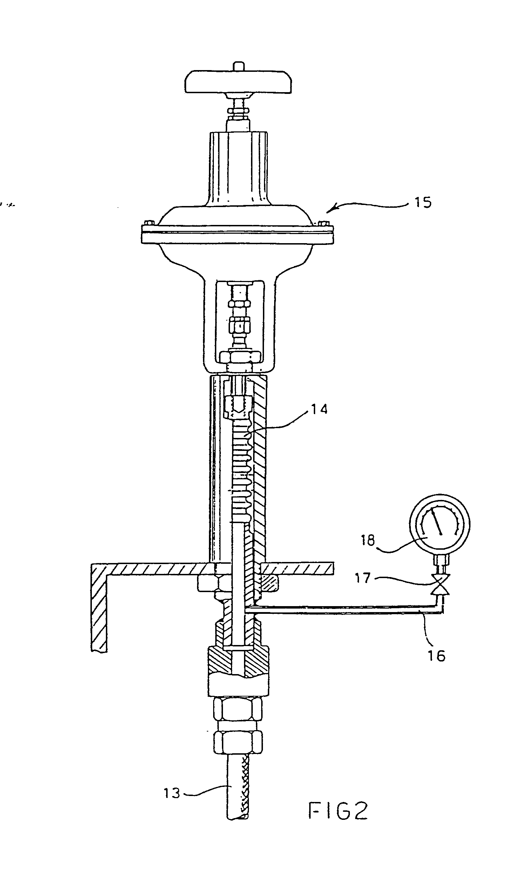

The pressure bellows 14, is connected with a spring control device comprising a pressure limitation device 15, as shown in Figure 2, which can compress the pressure bellows 14, more or less. The pressure of the pressure tube 11, can be read on a manometer 18, which is in connection with this via a manometer tube 16. The manometer tube 16, may be closed by a shut-off valve 17.

The flow limiting valve is adjusted so that it closes at a certain flow rate of the valve tube 1, by adjusting a corresponding pressure on the manometer 18, by using the pressure limitation device 15. If the flow rate should increase in the valve tube 1, for example after a tube rupture, an increasing depression occurs at the rear of the valve member 5, seen from the flow direction, as shown by an arrow on Figure 1. The pressure on the valve member 5, in direction towards the expansion bellows 10, increases and the force in the push rod 7, compresses the expansion bellows 10, so that the valve member 5, moves toward the seat 3, to effect closure. When the pipe rupture is repaired, the valve member 5, can again be influenced to open using the pressure limitation device 15.

When having varying the flow rate in the valve tube 1, the manometer 18, shows a varying pressure in the pressure tube 11. The reading on the manometer scale 18, will thereby be proportional to the flow rate in the valve tube 1. The manometer 18, can be graduated in flow rate magnitudes. In an alternative embodiment of the invention, the manometer 18, can be connected to a registration member which integrates the flow in time and thus the flow limiting valve also serves as a flow meter.

The pressure limitation device 15, includes in the example an air-operated membrane and thus this device can also be remotely controlled. At a quick cut-off, air pressure is arranged on the side of the membrane, which provides for a compression of the pressure limitation spring in the pressure limitation device 15, while the air pressure is arranged on the opposite side of the membrane at the opening of the valve.

## Claims

1. A flow limiting valve system for gas or liquid comprising in a valve tube (1), a normally open valve (3, 5) being urged into its open position by adjustable force producing means (10 to 15) so that it closes at a certain flow rate through said valve (3, 5), characterised in that said force producing means (10 to 15) is a telemotor system comprising a master unit (14) of a tubular and expandable bellows type and a slave unit (10) also of a tubular and expandable bellows type, said system being filled with a hydraulic fluid, wherein the remotely arranged master unit (14) is provided with an adjusting device (15) for compressing the bellows (14) more or less in order to vary the hydraulic pressure in the telemotor system, and wherein the slave unit (10) is connected with the valve member (5) of said normally open valve (3, 5).

2. A valve system according to Claim 1, characterised in that the valve member (5) is movable in the longitudinal direction of the valve tube (1) and adapted to be in close contact with the valve seat (3) when the force exerted by the expandable bellows (10) of the slave unit is overcome by a force on the valve member (5) in the opposite direction produced by the gas or liquid flow through said valve (3, 5).

3. A valve system according to Claim 1 or 2, characterised in that the expandable bellows (10) of the slave unit at its one end is connected to a push rod (7) on which the valve member (5) is mounted and at its other end is connected to the pressure tube (11) of the telemotor system which pressure tube is fixed to the valve tube (1) by means of a fastening device (12) and is connected to the expandable bellows (14) of the master unit which is arranged outside of the valve tube (1).

4. A valve system according to Claim 3, characterised in that the push rod (7) is provided with a tubular guide member (8) surrounding the expandable bellows (10) of the slave unit and being in sliding contact with the outer surface of said pressure tube (11).

5. A valve system according to any of the preceding claims, characterised in that the expandable bellows (14) of the master unit can be compressed more or less by means of a control device comprising a spring actuated pressure limitation device (15).

6. A valve system according to Claim 5, characterised in that the pressure limitation device (15) comprises a double acting air-operated membrane provided on the one hand for compression of the pressure limitation spring in the pressure limitation device (15) thereby causing a quick closing of the valve (3, 5) and on the other hand for compression of the expandable bellows (14) of the master unit thereby causing opening of the valve (3, 5).

7. A valve system according to any of the preceding claims, characterised by a manometer (18) indicating the hydraulic pressure in the telemotor system, which pressure is proportional to the flow rate through said valve (3, 5).

## Patentansprüche

1. Strömungsbegrenzungsventilsystem für Gas oder Flüssigkeit mit einem Ventilrohr (1), einem normal offenen Ventil (3, 5), das durch einstellbare, krafterzeugende Einrichtungen (10 bis 15) in seine Offenstellung gebracht ist, so daß es bei einem bestimmten Strömungsausmaß durch das Ventil (3, 5) schließt, dadurch gekennzeichnet, daß die krafterzeugenden Einrichtungen (10 bis 15) ein Telemotorsystem sind, und zwar mit einer Einstelleinheit (14) eines rohrförmigen und dehnbaren Balgtyps und einem Kraftverstärker (10) ebenfalls eines rohrförmigen und dehnbaren Balgtyps, wobei das System mit einem hydraulischen Medium gefüllt ist, und die entfernt angeordnete Einstelleinheit (14) mit einer Einstelleinrichtung (15) zum mehr oder weniger Zusammendrücken des Balges (14) versehen ist, um den hydraulischen Druck im Telemotorsystem zu ändern, und wobei der Kraftverstärker (10) mit dem Ventilglied (5) des normalerweise offenen Ventiles (3, 5) verbunden ist.

2. Ventilsystem nach Anspruch 1, dadurch gekennzeichnet, daß das Ventilglied (5) in Längsrichtung des Ventilrohres (1) beweglich ist und mit dem Ventilsitz (3) in engen Kontakt stehen kann, wenn die auf den ausdehnbaren Balg (10) des Kraftverstärkers ausgeübte Kraft von einer Kraft auf das Ventilglied (5) in entgegengesetzter Richtung überwunden wird, die durch die Gasoder Flüssigkeitsströmung durch das Ventil (3, 5) erzeugt wird.

3. Ventilsystem nach Anspruch 1 oder 2, dadurch gekennzeichnet, daß der ausdehnbare Balg (10) des Kraftverstärkers an einem Ende mit einer Schubstange (7) verbunden ist, auf der das Ventilglied (5) angeordnet ist, und am anderen Ende mit dem Druckrohr (11) des Telemotorsystems verbunden ist, wobei das Druckrohr am Ventilrohr (1) mittels einer Befestigungsvorrichtung (12) befestigt ist und mit dem ausdehnbaren Balg (14) der Einstelleinheit verbunden ist, die außerhalb des Ventilrohres (1) angeordnet ist.

4. Ventilsystem nach Anspruch 3, dadurch gekennzeichnet, daß die Schubstange (7) mit einem rohrförmigen Führungsglied (8) versehen ist, die den ausdehnbaren Balg (10) des Kraftverstärkers umgibt und mit der äußeren Fläche des Druckrohres (11) in Gleitkontakt steht.

5. Ventilsystem nach einem der vorhergehenden Ansprüche, dadurch gekennzeichnet, daß der ausdehnbare Balg (14) der Einstelleinheit mehr oder weniger mittels einer Steuereinrichtung zusammendrückbar ist, die eine federbetätigte druckbegrenzende Einrichtung (15) besitzt.

6. Ventilsystem nach Anspruch 5, dadurch gekennzeichnet, daß die druckbegrenzende Einrichtung (15) eine doppelwirkende, luftbetätigte Membran aufweist, die einerseits zum Zusammendrücken der druckbegrenzenden Feder in der druckbegrenzenden Einrichtung (15), wodurch ein rasches Schließen des Ventils (3, 5) hervorgerufen wird, und andererseits zum Zusammendrücken des dehnbaren Balges (14) der Einstelleinheit dient, wodurch ein Öffnen des Ventiles (3, 5) hervorgerufen wird.

7. Ventilsystem nach einem der vorhergehenden Ansprüche, dadurch gekennzeichnet, daß ein Manometer (18) den hydraulischen Druck im Telemotorsystem anzeigt, wobei der Druck proportional dem Durchflußmaß durch das Ventil (3, 5) ist.

## Revendications

1. Système de soupape limitant l'écoulement pour un gaz ou un liquide comprenant dans un tube de soupape (1), une soupape (3, 5) normalement ouverte qui est sollicitée à sa position ouverte par un moyen produisant une force réglable (10 à 15) de manière qu'elle se ferme à un certain débit à travers ladite soupape (3, 5), caractérisé en ce que ledit moyen produisant une force (10 à 15) est un système à télémoteur comprenant une unité maîtresse (14) du type soufflet tubulaire et dilatable et une unité esclave (10) également d'un type soufflet tubulaire et dilatable, ledit système étant rempli d'un fluide hydraulique, où l'unité maîtresse (14) agencée à distance est pourvue d'un dispositif d'ajustement (15) pour comprimer le soufflet (14) plus ou moins afin de faire varier la pression hydraulique dans le système à télémoteur, et où l'unité esclave (10) est connectée à l'organe de soupape (5) de ladite soupape normalement ouverte (3, 5).

2. Système de soupape selon la revendication 1, caractérisé en ce que l'organe de soupape (5) est mobile en direction longitudinale du tube de soupape (1) et est adpaté à être en contact proche avec le siège de soupape (3) lorsque la force exercée par le soufflet dilatable (10) de l'unité esclave est surmontée par une force sur l'organe de soupape (5) en direction opposée produite par l'écoulement de gaz ou de liquide à travers ladite soupape (3, 5).

3. Système de soupape selon la revendication 1 ou 2, caractérisé en ce que le soufflet dilatable (10) de l'unité esclave, à sa première extrémité, est connecté à une tige de poussée (7) sur laquelle est monté l'organe de soupape (5) et à son autre extrémité est connecté au tube de pression (11) du système à télémoteur, lequel tube de pression est fixé au tube de soupape (1) au moyen d'un dispositif de fixation (12) et est connecté au soufflet dilatable (14) de l'unité maîtresse qui est agencée en-dehors du tube de soupape (1).

4. Système de soupape selon la revendication 3, caractérisé en ce que la tige de poussée (7) est pourvue d'un organe tubulaire de guidage (8) entourant le soufflet dilatable (10) de l'unité esclave et qui est en contact coulissant avec la surface externe dudit tube de pression (11).

5. Système de soupape selon l'une des revendications précédentes caractérisé en ce que le soufflet dilatable (14) de l'unité maîtresse peut être plus ou moins comprimé au moyen d'un dispositif de commande comprenant un dispositif de limitation de la pression (15) actionné par ressort.

6. Système de soupape selon la revendication 5, caractérisé en ce que le dispositif de limitation de la pression (15) comprend une membrane à air à double action, prévue d'une part pour la compression du ressort de limitation de pression dans le dispositif de limitation de pression (15) afin de provoquer ainsi une fermeture rapide de la soupape (3, 5) et d'autre part pour la compression du soufflet dilatable (14) de l'unité maîtresse afin de provoquer ainsi l'ouverture de la soupape (3, 5).

7. Système de soupape selon l'une des revendications précédentes, caractérisé par un manomètre (18) indiquant la pression hydraulique dans le système à télémoteur, laquelle pression est proportionnelle au débit à travers ladite soupape (3, 5).

FIG1

0 180 584

FIG2